(19) Europäisches Patentamt / European Patent Office / Office européen des brevets

(11) **EP 4 357 767 A1**

(12) # EUROPEAN PATENT APPLICATION
published in accordance with Art. 153(4) EPC

(43) Date of publication:
**24.04.2024 Bulletin 2024/17**

(21) Application number: **22837605.9**

(22) Date of filing: **30.06.2022**

(51) International Patent Classification (IPC):
**G01N 23/046** *(2018.01)* **G01N 23/087** *(2018.01)*

(52) Cooperative Patent Classification (CPC):
**G01N 23/046; G01N 23/087**

(86) International application number:
**PCT/JP2022/026359**

(87) International publication number:
**WO 2023/282189 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.07.2021 JP 2021112603**

(71) Applicant: **Hamamatsu Photonics K.K.
Hamamatsu-shi, Shizuoka 435-8558 (JP)**

(72) Inventors:
• **MOCHIZUKI, Takahiro
  Hamamatsu-shi, Shizuoka 435-8558 (JP)**
• **NAKAMOTO, Katsuhiro
  Hamamatsu-shi, Shizuoka 435-8558 (JP)**

(74) Representative: **Grünecker Patent- und
Rechtsanwälte
PartG mbB
Leopoldstraße 4
80802 München (DE)**

(54) **ELEMENT DISTRIBUTION MEASURING DEVICE AND ELEMENT DISTRIBUTION MEASURING METHOD**

(57)  An element distribution measurement apparatus 1 is an apparatus for measuring a distribution of a content rate of each element contained in a measurement sample 4, and includes a measurement unit 2 and an operation unit 3. The measurement unit 2 acquires projection data by making rays of radiation of each of a plurality of spectra in a band including X-rays and γ-rays incident on the measurement sample 4. The operation unit 3 obtains the distribution of the content rate of each element contained in the measurement sample based on a distribution of a linear attenuation coefficient of the measurement sample obtained for each of the plurality of spectra based on the projection data acquired by the measurement unit 2, and a formula of the linear attenuation coefficient represented by using a value of a mass attenuation coefficient of each element, a value of an atomic weight of each element, a variable of the content rate of each element, and a variable of a density of the measurement sample for each of the plurality of spectra. Thus, an apparatus and a method capable of easily measuring a distribution of a content rate of each element contained in a measurement sample with an inexpensive configuration are realized.

**Fig.1**

**Description**

**Technical Field**

The present disclosure relates to an apparatus and a method for measuring a distribution of a content rate of a content rate of each element contained in a measurement sample.

**Background Art**

As a technique for measuring a content rate of each element contained in a measurement sample, a wavelength dispersive X-ray spectroscopy, an energy dispersive X-ray spectroscopy, and an unmixing method (see Non Patent Document 1) are known. In these techniques, a spectroscope (including a detector for dispersing) for dispersing light output from the measurement sample when the light is incident on the measurement sample is used.

**Citation List**

**Non Patent Literature**

Non Patent Document 1: Masahiko Hirano and Kazuji Matsumoto, "Fluorescence Imaging by Unmixing Method - Application for Live Cell Imaging", Journal of the Society of Instrument and Control Engineers, Vol.45 No.11, pp.977-981, 2006

**Summary of Invention**

**Technical Problem**

In the conventional techniques described above, it is necessary to use the spectroscope, and thus, the apparatus becomes expensive. Further, it is not easy to adjust an optical system including the spectroscope.
An object of the present invention is to provide an apparatus and a method capable of easily measuring a distribution of a content rate of each element contained in a measurement sample with an inexpensive configuration.

**Solution to Problem**

A first aspect of the present invention is an element distribution measurement apparatus. The element distribution measurement apparatus is an apparatus for measuring a distribution of a content rate of each element contained in a measurement sample, and includes (1) a measurement unit for acquiring projection data by making rays of radiation of each of a plurality of monochromatic spectra in a band including X-rays and γ-rays incident on a measurement sample; and (2) an operation unit for obtaining a distribution of a content rate of each element contained in the measurement sample based on a distribution of a linear attenuation coefficient of the measurement sample obtained for each of the plurality of monochromatic spectra based on the projection data acquired by the measurement unit, and a formula of the linear attenuation coefficient represented by using a value of a mass attenuation coefficient of each element, a value of an atomic weight of each element, a variable of the content rate of each element, and a variable of a density of the measurement sample for each of the plurality of monochromatic spectra.
A second aspect of the present invention is an element distribution measurement apparatus. The element distribution measurement apparatus is an apparatus for measuring a distribution of a content rate of each element contained in a measurement sample, and includes (1) a measurement unit for acquiring projection data by making rays of radiation of each of a plurality of polychromatic spectra in a band including X-rays and γ-rays incident on a measurement sample; and (2) an operation unit for obtaining a distribution of a content rate of each element contained in the measurement sample based on a distribution of an effective linear attenuation coefficient of the measurement sample obtained for each of the plurality of polychromatic spectra based on the projection data acquired by the measurement unit, and a formula of the effective linear attenuation coefficient represented by using a value of an effective mass attenuation coefficient of each element, a value of an atomic weight of each element, a variable of the content rate of each element, and a variable of a density of the measurement sample for each of the plurality of polychromatic spectra.
A third aspect of the present invention is an element distribution measurement apparatus. The element distribution measurement apparatus is an apparatus for measuring a distribution of a content rate of each element contained in a measurement sample, and includes (1) a measurement unit for acquiring projection data by making rays of radiation of each of a plurality of polychromatic spectra each including any one or more of a plurality of monochromatic spectra in a band including X-rays and γ-rays incident on a measurement sample; and (2) an operation unit for obtaining a

EP 4 357 767 A1

distribution of a content rate of each element contained in the measurement sample based on a distribution of a linear attenuation coefficient of the measurement sample obtained for each of the plurality of monochromatic spectra based on the projection data acquired by the measurement unit, and a formula of the linear attenuation coefficient represented by using a value of a mass attenuation coefficient of each element, a value of an atomic weight of each element, a variable of the content rate of each element, and a variable of a density of the measurement sample for each of the plurality of monochromatic spectra.

A first aspect of the present invention is an element distribution measurement method. The element distribution measurement method is a method for measuring a distribution of a content rate of each element contained in a measurement sample, and includes (1) a measurement step of acquiring projection data by making rays of radiation of each of a plurality of monochromatic spectra in a band including X-rays and γ-rays incident on a measurement sample; and (2) an operation step of obtaining a distribution of a content rate of each element contained in the measurement sample based on a distribution of a linear attenuation coefficient of the measurement sample obtained for each of the plurality of monochromatic spectra based on the projection data acquired in the measurement step, and a formula of the linear attenuation coefficient represented by using a value of a mass attenuation coefficient of each element, a value of an atomic weight of each element, a variable of the content rate of each element, and a variable of a density of the measurement sample for each of the plurality of monochromatic spectra.

A second aspect of the present invention is an element distribution measurement method. The element distribution measurement method is a method for measuring a distribution of a content rate of each element contained in a measurement sample, and includes (1) a measurement step of acquiring projection data by making rays of radiation of each of a plurality of polychromatic spectra in a band including X-rays and γ-rays incident on a measurement sample; and (2) an operation step of obtaining a distribution of a content rate of each element contained in the measurement sample based on a distribution of an effective linear attenuation coefficient of the measurement sample obtained for each of the plurality of polychromatic spectra based on the projection data acquired in the measurement step, and a formula of the effective linear attenuation coefficient represented by using a value of an effective mass attenuation coefficient of each element, a value of an atomic weight of each element, a variable of the content rate of each element, and a variable of a density of the measurement sample for each of the plurality of polychromatic spectra.

A third aspect of the present invention is an element distribution measurement method. The element distribution measurement method is a method for measuring a distribution of a content rate of each element contained in a measurement sample, and includes (1) a measurement step of acquiring projection data by making rays of radiation of each of a plurality of polychromatic spectra each including any one or more of a plurality of monochromatic spectra in a band including X-rays and γ-rays incident on a measurement sample; and (2) an operation step of obtaining a distribution of a content rate of each element contained in the measurement sample based on a distribution of a linear attenuation coefficient of the measurement sample obtained for each of the plurality of monochromatic spectra based on the projection data acquired in the measurement step, and a formula of the linear attenuation coefficient represented by using a value of a mass attenuation coefficient of each element, a value of an atomic weight of each element, a variable of the content rate of each element, and a variable of a density of the measurement sample for each of the plurality of monochromatic spectra.

### Advantageous Effects of Invention

According to the aspects of the present invention, it is possible to easily measure a distribution of a content rate of each element contained in a measurement sample with an inexpensive configuration.

### Brief Description of Drawings

[FIG 1] FIG. 1 is a diagram illustrating a configuration of an element distribution measurement apparatus 1.
[FIG 2] FIG. 2 is a diagram illustrating a configuration of an element distribution measurement apparatus 1A of a modification.
[FIG 3] FIG. 3 is a diagram illustrating a first configuration example of an irradiation unit 11.
[FIG 4] FIG. 4 is a diagram illustrating a second configuration example of the irradiation unit 11.
[FIG 5] FIG. 5 is a diagram illustrating a third configuration example of the irradiation unit 11.
[FIG 6] FIG. 6 is a flowchart illustrating a first aspect of an element distribution measurement method.
[FIG 7] FIG. 7 is a flowchart illustrating a second aspect of the element distribution measurement method.
[FIG 8] FIG 8 is a flowchart illustrating a third aspect of the element distribution measurement method.
[FIG 9] FIG. 9 is a diagram illustrating a cross-sectional structure of a measurement sample 4 assumed in a simulation.
[FIG 10] FIG. 10 includes (a) a diagram showing a projection image acquired by an imaging unit 12 when the measurement sample 4 is irradiated with X-rays of a zeroth polychromatic spectrum, and (b) a diagram showing a projection image acquired by the imaging unit 12 when the measurement sample 4 is irradiated with X-rays of a first polychromatic spectrum.

[FIG 11] FIG. 11 is a diagram showing a profile of the projection image.

[FIG 12] FIG. 12 includes (a) a diagram showing a distribution of an effective linear attenuation coefficient obtained when the measurement sample 4 is irradiated with X-rays of the zeroth polychromatic spectrum, and (b) a diagram showing a distribution of an effective linear attenuation coefficient obtained when the measurement sample 4 is irradiated with X-rays of the first polychromatic spectrum.

[FIG 13] FIG. 13 is a diagram showing a density distribution of the measurement sample 4.

[FIG 14] FIG. 14 is a diagram showing the density distribution of the measurement sample 4.

[FIG 15] FIG. 15 is a diagram showing a distribution of a content rate of each element in the measurement sample 4.

[FIG 16] FIG. 16 is a diagram showing the distribution of the content rate of each element in the measurement sample 4.

## Description of Embodiments

Hereinafter, embodiments of an element distribution measurement apparatus and an element distribution measurement method will be described in detail with reference to the accompanying drawings. In the description of the drawings, the same elements will be denoted by the same reference signs, and redundant description will be omitted. The present invention is not limited to these examples.

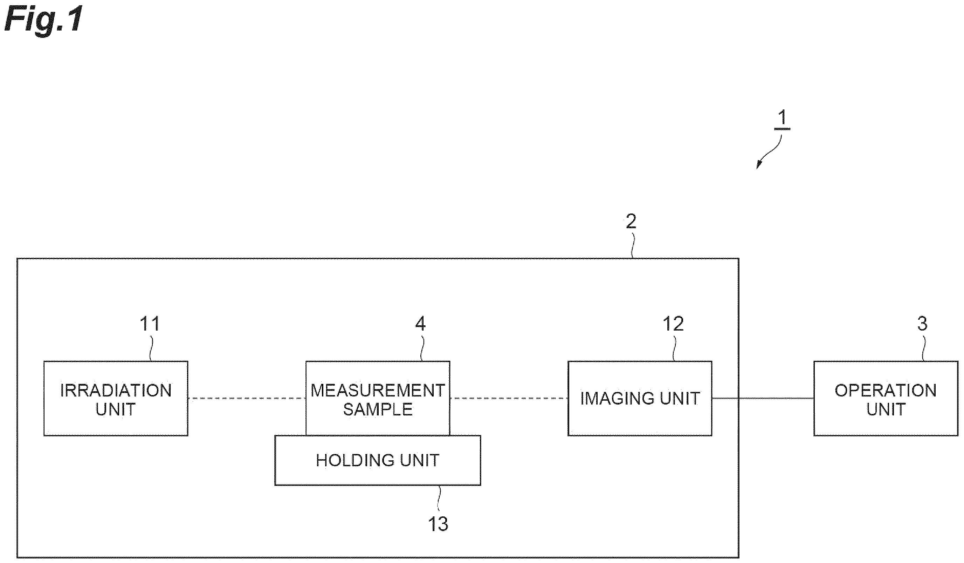

FIG. 1 is a diagram illustrating a configuration of an element distribution measurement apparatus 1. The element distribution measurement apparatus 1 is an apparatus for measuring a distribution of a content rate of each element contained in a measurement sample 4, and includes a measurement unit 2 and an operation unit 3.

The measurement unit 2 is a unit for acquiring projection data by making rays of radiation of each of a plurality of spectra in a band including X-rays and γ-rays incident on the measurement sample 4, and includes an irradiation unit 11, an imaging unit 12, and a holding unit 13. The operation unit 3 obtains the distribution of the content rate of each element contained in the measurement sample 4 by performing a predetermined operation using the projection data and the like acquired by the measurement unit 2. Hereinafter, a case where X-rays are used as the rays of radiation will be described.

The irradiation unit 11 outputs the X-rays with which the measurement sample 4 is to be irradiated. The irradiation unit 11 selects any spectrum from among the plurality of spectra, outputs the X-rays of the selected spectrum, and irradiates the measurement sample 4 with the X-rays. The spectrum of the X-rays output from the irradiation unit 11 preferably includes characteristic X-rays, and may be a monochromatic spectrum or may be a polychromatic spectrum.

The imaging unit 12 receives the X-rays output from the irradiation unit 11 and transmitted through the measurement sample 4, images an X-ray intensity distribution at the time of receiving, and acquires the projection data. The imaging unit 12 acquires the projection data for each of the plurality of spectra output from the irradiation unit 11.

The imaging unit 12 may be any unit as long as it can acquire an X-ray image. The imaging unit 12 may be an X-ray CCD camera or an X-ray CMOS camera which has a sensitivity to the X-rays. Further, the imaging unit 12 may have a configuration including a scintillator for generating scintillation light by X-ray incidence, and a CCD camera or a CMOS camera for imaging a scintillation light generation distribution in the scintillator.

The holding unit 13 holds the measurement sample 4, and arranges the measurement sample 4 on an X-ray propagation path from the irradiation unit 11 to the imaging unit 12. The holding unit 13 can rotate the measurement sample 4 around a central axis perpendicular to the X-ray propagation direction. Further, it is preferable that the holding unit 13 can move the measurement sample 4 in parallel with a direction parallel to the central axis, and it is also preferable that the holding unit 13 can move the measurement sample 4 in parallel with another direction.

The operation unit 3 obtains the distribution of the content rate of each element contained in the measurement sample 4 based on a distribution of a linear attenuation coefficient (or an effective linear attenuation coefficient) of the measurement sample obtained for each of the plurality of spectra based on the projection data acquired by the measurement unit 2, and a formula of the linear attenuation coefficient (or the effective linear attenuation coefficient) represented for each of the plurality of spectra. Further, the operation unit 3 may obtain a distribution of a density of the measurement sample 4. Details of the operation contents will be described later.

The operation unit 3 includes a CPU for performing processing such as various types of calculations, a memory (a RAM, a ROM, a hard disk drive, or the like) for storing a program necessary for the calculations, the projection data, calculation results, and the like, and a display for displaying the projection data, the calculation results, and the like. The operation unit 3 may be a computer.

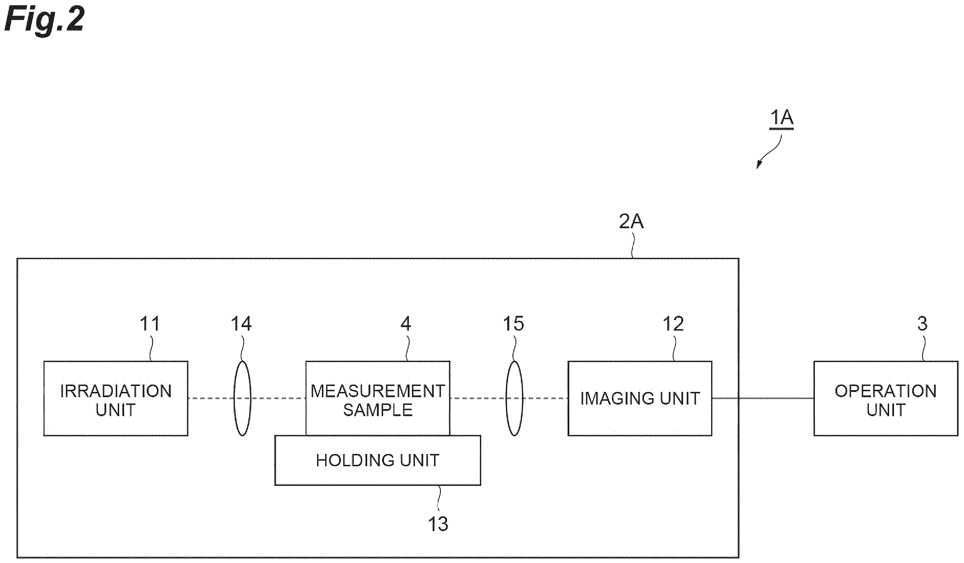

FIG. 2 is a diagram illustrating a configuration of an element distribution measurement apparatus 1A of a modification. As compared with the configuration of the element distribution measurement apparatus 1 (FIG 1), the configuration of the element distribution measurement apparatus 1A (FIG 2) is different in that a measurement unit 2A is provided instead of the measurement unit 2. The measurement unit 2A further includes a focusing optical system 14 and an imaging optical system 15, in addition to the irradiation unit 11, the imaging unit 12, and the holding unit 13.

The focusing optical system 14 is provided on the X-ray propagation path extending from the irradiation unit 11 to the measurement sample 4. The focusing optical system 14 converges the X-rays diverged and output from the irradiation unit 11 (or reduces a divergence angle) so that the the measurement sample 4 can be efficiently irradiated with the X-rays. The imaging optical system 15 is provided on the X-ray propagation path extending from the measurement sample 4 to the imaging unit 12. The imaging optical system 15 can form an image of the X-rays transmitted through and output from the measurement sample 4 on an imaging plane of the imaging unit 12.

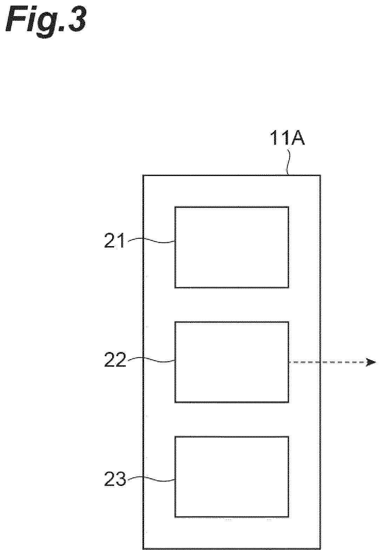

Next, configuration examples of the irradiation unit 11 will be described with reference to FIG. 3 to FIG. 5. In any configuration example, the irradiation unit 11 can select any spectrum from among the plurality of spectra, and output the X-rays of the selected spectrum.

An irradiation unit 11A of a first configuration example illustrated in FIG. 3 includes a plurality of (three in this diagram) X-ray tubes 21 to 23 for outputting the X-rays having spectra different from each other. The X-ray tubes 21 to 23 may have tube voltages different from each other, may include targets formed of materials different from each other, or may include filters having transmission properties different from each other. The irradiation unit 11A selects any one X-ray tube from among the plurality of X-ray tubes 21 to 23, and irradiates the measurement sample 4 with the X-rays output from the selected X-ray tube.

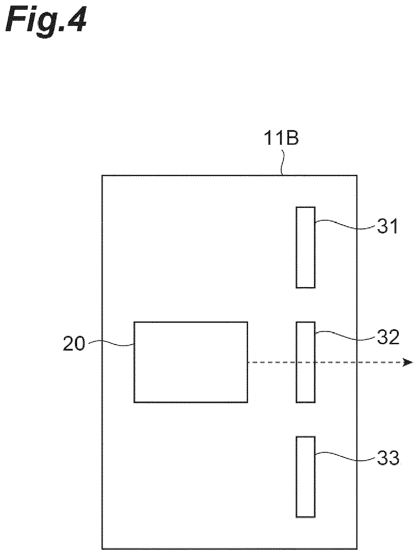

An irradiation unit 11B of a second configuration example illustrated in FIG. 4 includes one X-ray tube 20 and a plurality of (three in this diagram) filters 31 to 33 having transmission properties different from each other. The irradiation unit 11B selects any one filter from among the plurality of filters 31 to 33, and irradiates the measurement sample 4 with the X-rays output from the X-ray tube 20 and transmitted through the selected filter.

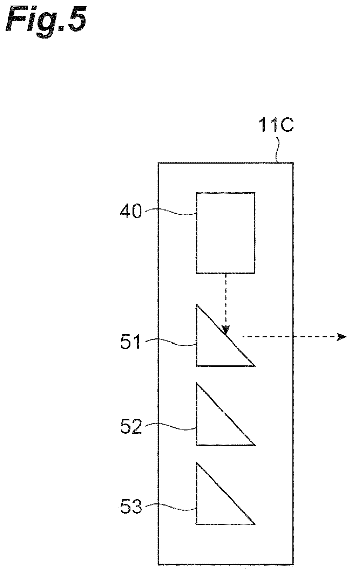

An irradiation unit 11C of a third configuration example illustrated in FIG. 5 includes one electron beam generation unit 40 and a plurality of (three in this diagram) targets 51 to 53 formed of materials different from each other. The irradiation unit 11C selects any one target from among the plurality of targets 51 to 53, causes an electron beam from the electron beam generation unit 40 to be incident on the selected target, and irradiates the measurement sample 4 with the X-rays generated by the selected target.

Any two or more of the switching of the X-ray tube described in FIG. 3, the switching of the filter described in FIG. 4, and the switching of the target described in FIG. 5 may be combined. This makes it possible to output the X-rays of more types of spectra.

An element distribution measurement method is a method for measuring the distribution of the content rate of each element contained in the measurement sample 4, and includes a measurement step and an operation step.

In the measurement step, the projection data is acquired by making the rays of radiation (X-rays) of each of the plurality of spectra in the band including X-rays and $\gamma$-rays incident on the measurement sample 4. The measurement step can be performed by the measurement unit 2 (or the measurement unit 2A). In the operation step, the distribution of the content rate of each element contained in the measurement sample 4 is obtained by performing the predetermined operation using the projection data and the like acquired in the measurement step. The operation step can be performed by the operation unit 3. The operation of the element distribution measurement apparatus and aspects of the flow of the element distribution measurement method will be described next.

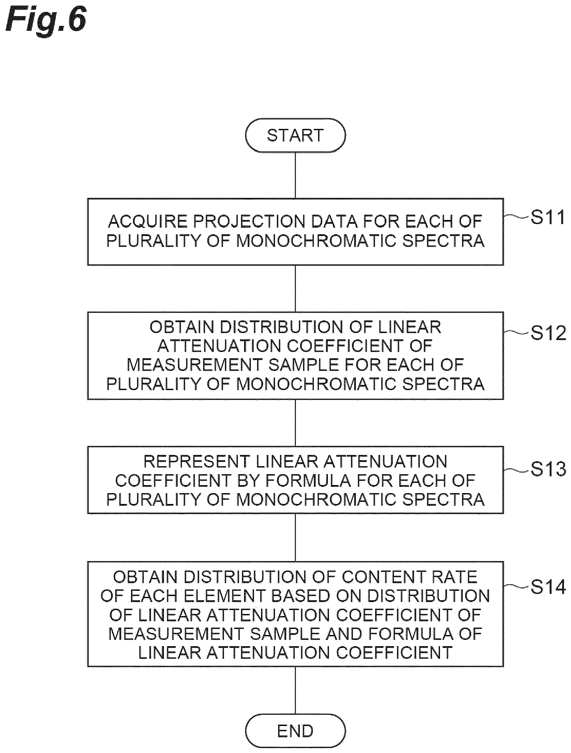

FIG. 6 is a flowchart illustrating a first aspect of the element distribution measurement method. The element distribution measurement method of the first aspect includes steps S11 to S 14. The step S11 is included in the measurement step performed by the measurement unit 2 (or the measurement unit 2A). The steps S12 to S14 are included in the operation step performed by the operation unit 3. In addition, the steps S11, S12, and S14 are performed in this order, and further, the step S13 may be performed before the step S14.

In the step S11, the projection data is acquired by making the rays of radiation (X-rays) of each of the plurality of monochromatic spectra incident on the measurement sample 4. Specifically, it is as follows.

The measurement sample 4 is irradiated with the X-rays output from the irradiation unit 11, and the imaging unit 12 receives the X-rays transmitted through the measurement sample 4 to acquire the projection data. In this case, the X-rays of each of the plurality of monochromatic spectra are sequentially output from the irradiation unit 11, and the projection data is acquired for each of the plurality of monochromatic spectra. Further, the holding unit 13 rotates the measurement sample 4 around the central axis perpendicular to the X-ray propagation direction and causes the X-rays to be incident on the measurement sample 4 from various directions, thereby acquiring the projection data.

When the X-rays are a parallel beam, the measurement sample 4 may be rotated within a range of 180°. When the X-rays are a fan beam or a cone beam, the measurement sample 4 may be rotated in an angle range according to a divergence angle or a convergence angle of the X-rays.

In the step S12, image reconstruction processing is performed for each of the plurality of monochromatic spectra based on the projection data acquired in the step S11 to obtain a distribution of a linear attenuation coefficient of the measurement sample 4. Specifically, it is as follows. When the X-rays of any one monochromatic spectrum out of the plurality of monochromatic spectra are made incident on the measurement sample 4, an incident X-ray intensity is set to A, and an i-th measured value out of measured values obtained by the imaging unit 12 is set to $I_i$.

i is a subscript for distinguishing both a pixel number on the imaging plane of the imaging unit 12 and an orientation of the measurement sample 4. For example, it can be represented by i = (pixel number) + (total number of pixels) $\times$ (numerical value representing orientation). When the orientation at the time of rotation of the measurement sample 4 is set in $\delta$ increments, the numerical value representing the orientation of the measurement sample 4 may be set to 0 for the reference orientation, and may be set to a value obtained by dividing the angle changed from the reference orientation by the rotation by $\delta$.

The measurement sample 4 is spatially discretized and divided into a plurality of voxels, the linear attenuation coefficient of a j-th voxel for the incident X-rays is set to $\mu_j$, and a distance with which the X-rays pass through the j-th voxel when the i-th measured value $I_i$ is acquired is set to $L_{ij}$. In this case, $I_i$ is represented by the following Formula (1). The following Formula (2) is obtained by transforming the Formula. $L_{ij}$ is known, and the right side of Formula (2) is also known.

[Formula 1]

$$I_i = A \cdot \exp\left( -\sum_j L_{ij}\mu_j \right) \tag{1}$$

[Formula 2]

$$\sum_j L_{ij}\mu_j = -\ln\left( \frac{I_i}{A} \right) \tag{2}$$

Therefore, by solving the simultaneous equations of Formula (2), the linear attenuation coefficient $\mu_j$ of each voxel can be obtained, and the three-dimensional distribution of the linear attenuation coefficient $\mu$ of the measurement sample 4 can be obtained. An image reconstruction algorithm (for example, a filtered back projection method or an MLEM method) of computed tomography (CT) can be applied to the above processing. Further, by performing the image reconstruction processing for each of the plurality of monochromatic spectra, it is possible to obtain the three-dimensional distribution of the linear attenuation coefficient $\mu$ of the measurement sample 4 for each of the plurality of monochromatic spectra.

In the step S13, for each of the plurality of monochromatic spectra, the linear attenuation coefficient is represented by a formula using a value of a mass attenuation coefficient of each element, a value of an atomic weight of each element, a variable of the content rate of each element, and a variable of a density of the measurement sample 4. Specifically, it is as follows. The atomic weight of an i-th element out of a plurality of elements for which the content rates are to be obtained is set to $M_i$, and the content rate of the i-th element is set to $\alpha_i$. The plurality of elements for which the content rates are to be obtained may be 88 types of elements existing in nature, or may be elements assumed to be contained in the measurement sample 4.

The mass attenuation coefficient of the i-th element for the k-th monochromatic spectrum out of the plurality of monochromatic spectra is set to $v_{ki}$. The density of the measurement sample 4 is set to $\rho$. Among these, the atomic weight $M_i$ and the mass attenuation coefficient $v_{ki}$ of the i-th element are known values, and the content rate $\alpha_i$ of the i-th element and the density $\rho$ of the measurement sample 4 are unknown variables. The linear attenuation coefficient $\mu_k$ for the k-th monochromatic spectrum is represented by the following Formula (3).

[Formula 3]

$$\mu_k = \frac{\rho \sum\limits_i v_{ki} M_i \alpha_i}{\sum\limits_n M_n \alpha_n} \tag{3}$$

In the step S14, the distribution of the content rate of each element contained in the measurement sample 4 is obtained based on the distribution of the linear attenuation coefficient of the measurement sample 4 obtained in the step S12 and the formula of the linear attenuation coefficient represented in the step S13. Specifically, it is as follows.

In the following description, two types of elements are contained in the measurement sample 4 for simplification of the description. The above Formula (3) can be represented by using a column vector and a matrix as in the following Formula (4). When an inverse matrix exists for the matrix of two rows and two columns on the right side of Formula (4), the following Formula (5) is obtained.

[Formula 4]

$$\begin{pmatrix} \mu_0 \\ \mu_1 \end{pmatrix} = \begin{pmatrix} v_{00} & v_{01} \\ v_{10} & v_{11} \end{pmatrix} \begin{pmatrix} \dfrac{\rho M_0 \alpha_0}{\displaystyle\sum_n M_n \alpha_n} \\ \dfrac{\rho M_1 \alpha_1}{\displaystyle\sum_n M_n \alpha_n} \end{pmatrix} \qquad (4)$$

[Formula 5]

$$\begin{pmatrix} \dfrac{\rho M_0 \alpha_0}{\displaystyle\sum_n M_n \alpha_n} \\ \dfrac{\rho M_1 \alpha_1}{\displaystyle\sum_n M_n \alpha_n} \end{pmatrix} = \begin{pmatrix} v_{00} & v_{01} \\ v_{10} & v_{11} \end{pmatrix}^{-1} \begin{pmatrix} \mu_0 \\ \mu_1 \end{pmatrix} \qquad (5)$$

In addition, each element of the column vector on the left side of Formula (5) is represented by $\beta_i$ as in the following Formula (6). The value of each element of the matrix of two rows and two columns on the right side of Formula (5) is known, and the value of each element of the column vector on the right side of Formula (5) is already obtained in the step S13, and thus, the value of $\beta_i$ is obtained from Formula (5).

[Formula 6]

$$\beta_i = \frac{\rho M_i \alpha_i}{\displaystyle\sum_n M_n \alpha_n} \qquad (6)$$

There is a relationship of the following Formula (7) between $\alpha_i$, $\beta_i$, and $M_i$, and the value of $M_i$ is known, and thus, the value of $\alpha_i$ is obtained. Further, the value of the density $\rho$ is obtained by the following Formula (8). The value of $\alpha_i$ and the value of the density $\rho$ can be obtained for each voxel of the measurement sample 4, and thus, the distribution of the content rate $\alpha_i$ of each element contained in the measurement sample 4 can be obtained, and further, the distribution of the density $\rho$ of the measurement sample 4 can also be obtained.

[Formula 7]

$$\alpha_i : \alpha_j = \frac{\beta_i}{M_i} : \frac{\beta_j}{M_j} \qquad (7)$$

[Formula 8]

$$\rho = \sum_i \beta_i \qquad (8)$$

In the first aspect, it is preferable that the number of monochromatic spectra is equal to or larger than the number of types of the elements for which the content rates are to be obtained. When the number of monochromatic spectra is equal to the number of types of the elements, the distribution of the content rate $\alpha_i$ of each element contained in the measurement sample 4 and the distribution of the density $\rho$ of the measurement sample 4 can be obtained by using the calculation described above. When the number of monochromatic spectra is larger than the number of types of the elements, the distribution of the content rate $\alpha_i$ of each element contained in the measurement sample 4 and the distribution of the density $\rho$ of the measurement sample 4 can be obtained by using the least squares method or the like.

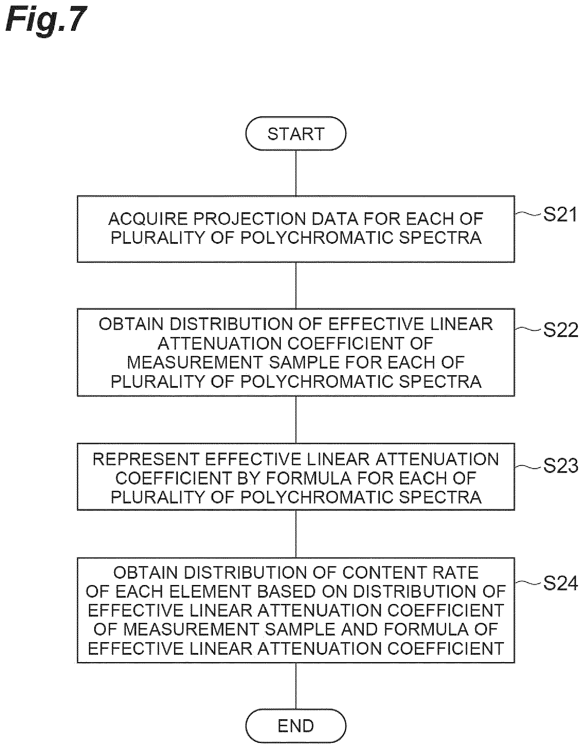

FIG. 7 is a flowchart illustrating a second aspect of the element distribution measurement method. The element distribution measurement method of the second aspect includes steps S21 to S24. The step S21 is included in the measurement step performed by the measurement unit 2 (or the measurement unit 2A). The steps S22 to S24 are included in the operation step performed by the operation unit 3. In addition, the steps S21, S22, and S24 are performed in this order, and further, the step S23 may be performed before the step S24.

In the step S21, the projection data is acquired by making the rays of radiation (X-rays) of each of the plurality of polychromatic spectra incident on the measurement sample 4. Specifically, it is as follows.

The measurement sample 4 is irradiated with the X-rays output from the irradiation unit 11, and the imaging unit 12 receives the X-rays transmitted through the measurement sample 4 to acquire the projection data. In this case, each of the plurality of polychromatic spectra is set to include one or more of the plurality of monochromatic spectra (characteristic X-rays).

The X-rays of each of the plurality of polychromatic spectra are sequentially output from the irradiation unit 11, and the projection data is acquired for each of the plurality of polychromatic spectra. Further, the holding unit 13 rotates the measurement sample 4 around the central axis perpendicular to the X-ray propagation direction and causes the X-rays to be incident on the measurement sample 4 from various directions, thereby acquiring the projection data.

In the step S22, the image reconstruction processing is performed for each of the plurality of polychromatic spectra based on the projection data acquired in the step S21 to obtain a distribution of an effective linear attenuation coefficient of the measurement sample 4. Specifically, it is as follows. When the X-rays of any one polychromatic spectrum out of the plurality of polychromatic spectra are made incident on the measurement sample 4, an X-ray intensity of the k-th monochromatic spectrum out of the incident X-rays is set to $A_k$, and the i-th measured value out of the measured values obtained by the imaging unit 12 is set to $I_i$.

The measurement sample 4 is spatially discretized and divided into the plurality of voxels, the linear attenuation coefficient of the j-th voxel for the X-rays of the k-th monochromatic spectrum in the incident X-rays is set to $\mu_{kj}$, and the distance with which the X-rays pass through the j-th voxel when the i-th measured value $I_i$ is acquired is set to $L_{ij}$. In this case, $I_i$ is represented by the following Formula (9).

[Formula 9]

$$I_i = \sum_k A_k \cdot \exp\left(-\sum_j L_{ij}\mu_{kj}\right) \tag{9}$$

The effective linear attenuation coefficient $\mu^{eff}_j$ represented by the following Formula (10) is defined. The effective linear attenuation coefficient $\mu^{eff}_j$ is the linear attenuation coefficient of the j-th voxel for the X-rays of the polychromatic spectrum.

[Formula 10]

$$\mu^{eff}_j \equiv \frac{\sum_{k'} A_{k'}\mu_{k'j}}{\sum_{k''} A_{k''}} \tag{10}$$

By using the effective linear attenuation coefficient $\mu^{eff}_j$, when the linear attenuation coefficient $\mu_{kj}$ is small, $I_i$ can be approximated by the following Formula (11) by performing Taylor expansion on an exponential function on the right side of Formula (9). The following Formula (12) is obtained by transforming the Formula. $L_{ij}$ is known, and the right side of Formula (12) is also known.

[Formula 11]

$$I_i \simeq \left( \sum_k A_k \right) \cdot \exp\left( -\sum_j L_{ij} \mu_j^{eff} \right) \qquad (11)$$

[Formula 12]

$$\sum_j L_{ij} \mu_j^{eff} = -\ln\left( \frac{I_i}{\sum_k A_k} \right) \qquad (12)$$

Therefore, by solving the simultaneous equations of Formula (12), the effective linear attenuation coefficient $\mu^{eff}$ of each voxel can be obtained, and the three-dimensional distribution of the effective linear attenuation coefficient $\mu^{eff}$ of the measurement sample 4 can be obtained. Further, by performing the image reconstruction processing for each of the plurality of polychromatic spectra, it is possible to obtain the three-dimensional distribution of the effective linear attenuation coefficient $\mu^{eff}$ of the measurement sample 4 for each of the plurality of polychromatic spectra.

In the step S23, for each of the plurality of polychromatic spectra, the effective linear attenuation coefficient is represented by a formula using a value of an effective mass attenuation coefficient of each element, a value of the atomic weight of each element, a variable of the content rate of each element, and a variable of the density of the measurement sample 4. Specifically, it is as follows. The atomic weight of the i-th element out of the plurality of elements for which the content rates are to be obtained is set to $M_i$, and the content rate of the i-th element is set to $\alpha_i$.

The effective mass attenuation coefficient of the i-th element for the p-th polychromatic spectrum out of the plurality of polychromatic spectra is set to $v^{eff}_{pi}$. The effective mass attenuation coefficient $v^{eff}_{pi}$ is represented by the following Formula (13) using the mass attenuation coefficient $v_{ki}$ of the i-th element for the k-th monochromatic spectrum.

[Formula 13]

$$v_{pi}^{eff} \equiv \frac{\sum_{k'} A_{k'} v_{k'i}}{\sum_{k''} A_{k''}} \qquad (13)$$

The density of the measurement sample 4 is set to $\rho$. Among these, the atomic weight $M_i$ and the effective mass attenuation coefficient $v^{eff}_{pi}$ of the i-th element are known values, and the content rate $\alpha_i$ of the i-th element and the density $\rho$ of the measurement sample 4 are unknown variables. The effective linear attenuation coefficient $\mu^{eff}_p$ for the p-th polychromatic spectrum is represented by the following Formula (14).

[Formula 14]

$$\mu_p^{eff} = \frac{\rho \sum_i v_{pi}^{eff} M_i \alpha_i}{\sum_n M_n \alpha_n} \qquad (14)$$

In the step S24, the distribution of the content rate of each element contained in the measurement sample 4 is obtained based on the distribution of the effective linear attenuation coefficient of the measurement sample 4 obtained in the step S22 and the formula of the effective linear attenuation coefficient represented in the step S23. Specifically, it is as follows.

In the following description, two types of elements are contained in the measurement sample 4 for simplification of the description. The above Formula (14) can be represented by using a column vector and a matrix as in the following Formula (15). When an inverse matrix exists for the matrix of two rows and two columns on the right side of Formula (15), the following Formula (16) is obtained.

[Formula 15]

$$\begin{pmatrix} \mu_0^{eff} \\ \mu_1^{eff} \end{pmatrix} = \begin{pmatrix} v_{00}^{eff} & v_{01}^{eff} \\ v_{10}^{eff} & v_{11}^{eff} \end{pmatrix} \begin{pmatrix} \dfrac{\rho M_0 \alpha_0}{\sum_n M_n \alpha_n} \\ \dfrac{\rho M_1 \alpha_1}{\sum_n M_n \alpha_n} \end{pmatrix} \qquad (15)$$

[Formula 16]

$$\begin{pmatrix} \dfrac{\rho M_0 \alpha_0}{\sum_n M_n \alpha_n} \\ \dfrac{\rho M_1 \alpha_1}{\sum_n M_n \alpha_n} \end{pmatrix} = \begin{pmatrix} v_{00}^{eff} & v_{01}^{eff} \\ v_{10}^{eff} & v_{11}^{eff} \end{pmatrix}^{-1} \begin{pmatrix} \mu_0^{eff} \\ \mu_1^{eff} \end{pmatrix} \qquad (16)$$

In addition, each element of the column vector on the left side of Formula (16) is represented by $\beta_i$ as in the above Formula (6). The value of each element of the matrix of two rows and two columns on the right side of Formula (16) is known, and the value of each element of the column vector on the right side of Formula (16) is already obtained in the step S23, and thus, the value of $\beta_i$ is obtained from Formula (16).

There is a relationship of the above Formula (7) between $\alpha_i$, $\beta_i$, and M;, and the value of $M_i$ is known, and thus, the value of $\alpha_i$ is obtained. Further, the value of the density $\rho$ is obtained by the above Formula (8). The value of $\alpha_i$ and the value of the density $\rho$ can be obtained for each voxel of the measurement sample 4, and thus, the distribution of the content rate $\alpha_i$ of each element contained in the measurement sample 4 can be obtained, and further, the distribution of the density $\rho$ of the measurement sample 4 can also be obtained.

In the second aspect, it is preferable that the number of polychromatic spectra is equal to or larger than the number of types of the elements for which the content rates are to be obtained. When the number of polychromatic spectra is equal to the number of types of the elements, the distribution of the content rate $\alpha_i$ of each element contained in the measurement sample 4 and the distribution of the density $\rho$ of the measurement sample 4 can be obtained by using the calculation described above. When the number of polychromatic spectra is larger than the number of types of the elements, the distribution of the content rate $\alpha_i$ of each element contained in the measurement sample 4 and the distribution of the density $\rho$ of the measurement sample 4 can be obtained by using the least squares method or the like.

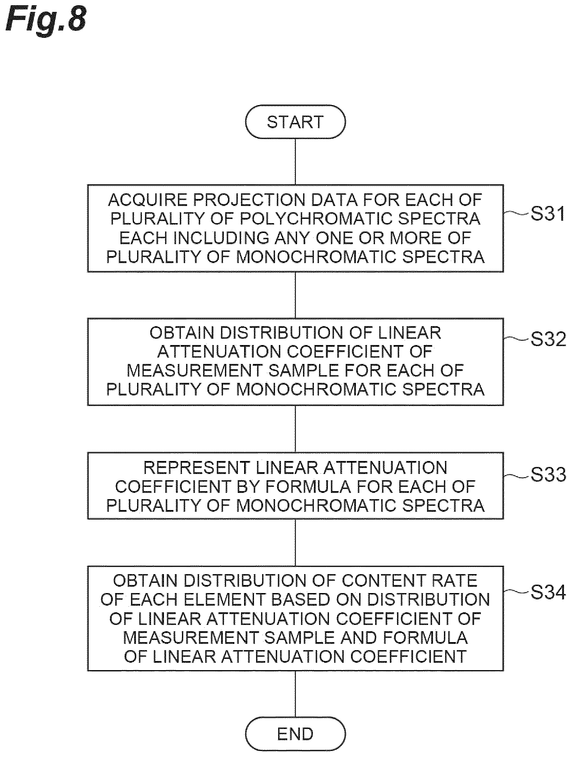

FIG. 8 is a flowchart illustrating a third aspect of the element distribution measurement method. The element distribution measurement method of the third aspect includes steps S31 to S34. The step S31 is included in the measurement step performed by the measurement unit 2 (or the measurement unit 2A). The steps S32 to S34 are included in the operation step performed by the operation unit 3. In addition, the steps S31, S32, and S34 are performed in this order, and further, the step S33 may be performed before the step S34.

In the step S31, the projection data is acquired by making the rays of radiation (X-rays) of each of the plurality of polychromatic spectra incident on the measurement sample 4. Specifically, it is as follows.

The measurement sample 4 is irradiated with the X-rays output from the irradiation unit 11, and the imaging unit 12 receives the X-rays transmitted through the measurement sample 4 to acquire the projection data. In this case, each of the plurality of polychromatic spectra is set to include one or more of the plurality of monochromatic spectra (characteristic X-rays).

The X-rays of each of the plurality of polychromatic spectra are sequentially output from the irradiation unit 11, and the projection data is acquired for each of the plurality of polychromatic spectra. Further, the holding unit 13 rotates the measurement sample 4 around the central axis perpendicular to the X-ray propagation direction and causes the X-rays to be incident on the measurement sample 4 from various directions, thereby acquiring the projection data.

In the step S32, the image reconstruction processing is performed for each of the plurality of monochromatic spectra based on the projection data acquired in the step S31 to obtain the distribution of the linear attenuation coefficient of the measurement sample 4. Specifically, it is as follows. When the X-rays of the p-th polychromatic spectrum out of the plurality of polychromatic spectra are made incident on the measurement sample 4, the X-ray intensity of the k-th monochromatic spectrum out of the incident X-rays is set to $A_{pk}$, and the i-th measured value out of the measured values obtained by the imaging unit 12 is set to $I_{pi}$.

The measurement sample 4 is spatially discretized and divided into the plurality of voxels, the linear attenuation coefficient of the j-th voxel for the X-rays of the k-th monochromatic spectrum in the incident X-rays is set to $\mu_{kj}$, and the distance with which the X-rays pass through the j-th voxel when the i-th measured value $I_{pi}$ is acquired is set to $L_{ij}$. In this case, $I_{pi}$ is represented by the following Formula (17).

[Formula 17]

$$I_{pi} = \sum_k A_{pk} \cdot \exp\left(-\sum_j L_{ij}\mu_{kj}\right) \qquad (17)$$

In the following description, two types of polychromatic spectra are used, and two types of monochromatic spectra are used for simplification of the description. The above Formula (17) can be represented by using a column vector and a matrix as in the following Formula (18). When an inverse matrix exists for the matrix of two rows and two columns on the right side of Formula (18), the following Formula (19) is obtained. $L_{ij}$ is known, and the right side of Formula (19) is also known.

[Formula 18]

$$\begin{pmatrix} I_{0i} \\ I_{1i} \end{pmatrix} = \begin{pmatrix} A_{00} & A_{01} \\ A_{10} & A_{11} \end{pmatrix} \begin{pmatrix} \exp\left(-\sum_j L_{ij}\mu_{0j}\right) \\ \exp\left(-\sum_j L_{ij}\mu_{1j}\right) \end{pmatrix} \qquad (18)$$

[Formula 19]

$$\begin{pmatrix} \exp\left(-\sum_j L_{ij}\mu_{0j}\right) \\ \exp\left(-\sum_j L_{ij}\mu_{1j}\right) \end{pmatrix} = \begin{pmatrix} A_{00} & A_{01} \\ A_{10} & A_{11} \end{pmatrix}^{-1} \begin{pmatrix} I_{0i} \\ I_{1i} \end{pmatrix} \qquad (19)$$

Therefore, by solving the simultaneous equations of Formula (19), the linear attenuation coefficient $\mu_{kj}$ of each voxel for the k-th monochromatic spectrum can be obtained, and the three-dimensional distribution of the linear attenuation coefficient $\mu$ of the measurement sample 4 for each of the plurality of monochromatic spectra can be obtained.

As described above, in the third aspect, it is possible to obtain the three-dimensional distribution of the linear attenuation coefficient $\mu$ of the measurement sample 4 for each of the plurality of monochromatic spectra, based on the projection data acquired by making the rays of radiation of each of the plurality of polychromatic spectra incident on the measurement sample 4. This is referred to as monochromatization processing.

In the step S33, for each of the plurality of monochromatic spectra, the linear attenuation coefficient is represented by a formula using a value of the mass attenuation coefficient of each element, a value of the atomic weight of each element, a variable of the content rate of each element, and a variable of the density of the measurement sample 4. The specific processing of the step S33 in the third aspect is the same as that of the step S13 in the first aspect.

In the step S34, the distribution of the content rate of each element contained in the measurement sample 4 is obtained based on the distribution of the linear attenuation coefficient of the measurement sample 4 obtained in the step S32 and the formula of the linear attenuation coefficient represented in the step S33. The specific processing of the step S34 in the third aspect is the same as that of the step S14 in the first aspect.

In the third aspect, it is preferable that the number of polychromatic spectra is equal to or larger than the number of types of the elements for which the content rates are to be obtained. When the number of polychromatic spectra is equal to the number of types of the elements, the distribution of the content rate $\alpha_i$ of each element contained in the measurement sample 4 and the distribution of the density $\rho$ of the measurement sample 4 can be obtained by using the calculation described above. When the number of polychromatic spectra is larger than the number of types of the elements, the distribution of the content rate $\alpha_i$ of each element contained in the measurement sample 4 and the distribution of the density $\rho$ of the measurement sample 4 can be obtained by using the least squares method or the like.

Further, in the third aspect, it is preferable that the number of polychromatic spectra is equal to or larger than the number of monochromatic spectra (monochromatic X-rays) included in any of the plurality of polychromatic spectra. When the number of polychromatic spectra is equal to the number of monochromatic spectra, the calculation of the above Formula (17) to Formula (19) can be performed. When the number of polychromatic spectra is larger than the number of monochromatic spectra, the least squares method or the like can be used.

Next, a simulation result will be described. Some of the parameters appearing in conditions and results of the simulation described below originally have units, however, the simulation is performed without setting units.

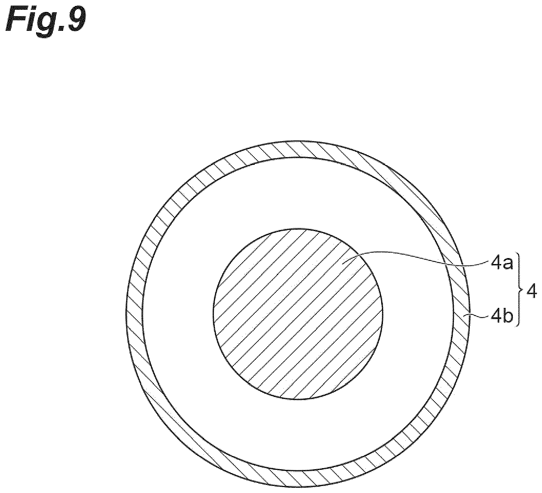

FIG. 9 is a diagram illustrating a cross-sectional structure of the measurement sample 4 assumed in the simulation. In the assumed measurement sample 4, a spherical body 4a having a diameter of 10, and a spherical shell 4b having an outer diameter of 20 and an inner diameter of 18 are concentrically arranged. Each of the spherical body 4a and the spherical shell 4b is set to contain two types of elements A and B.

The atomic weight $M_0$ of the element A is set to 1, and the atomic weight $M_1$ of the element B is set to 2. For the spherical body 4a, the content rate $\alpha_0$ of the element A is set to 0.6, and the content rate $\alpha_1$ of the element B is set to 0.4, and the density $\rho$ is set to 0.2. For the spherical shell 4b, the content rate $\alpha_0$ of the element A is set to 0.4, and the content rate $\alpha_1$ of the element B is set to 0.6, and the density $\rho$ is set to 0.1.

The measurement sample 4 is irradiated with the X-rays of each of two types of polychromatic spectra from the irradiation unit 11 as a parallel beam. Each of the two types of polychromatic spectra is set to include a zeroth monochromatic spectrum and a first monochromatic spectrum. The zeroth polychromatic spectrum is set to include the zeroth monochromatic spectrum having an intensity $A_{00}$ of 0.1 and the first monochromatic spectrum having an intensity $A_{01}$ of 0.9. The first polychromatic spectrum is set to include the zeroth monochromatic spectrum having an intensity $A_{10}$ of 0.9 and the first monochromatic spectrum having an intensity $A_{11}$ of 0.1.

The mass attenuation coefficient $\nu_{00}$ of the element A for the zeroth monochromatic spectrum is set to 0.053, and the mass attenuation coefficient $\nu_{01}$ of the element B for the zeroth monochromatic spectrum is set to 0.021. The mass attenuation coefficient $\nu_{10}$ of the element A for the first monochromatic spectrum is set to 0.016, and the mass attenuation coefficient $\nu_{11}$ of the element B for the first monochromatic spectrum is set to 0.063. The orientation at the time of rotation of the measurement sample 4 by the holding unit 13 is set in increments of 0.5°. The pixel size of the imaging plane of the imaging unit 12 is set to 0.1.

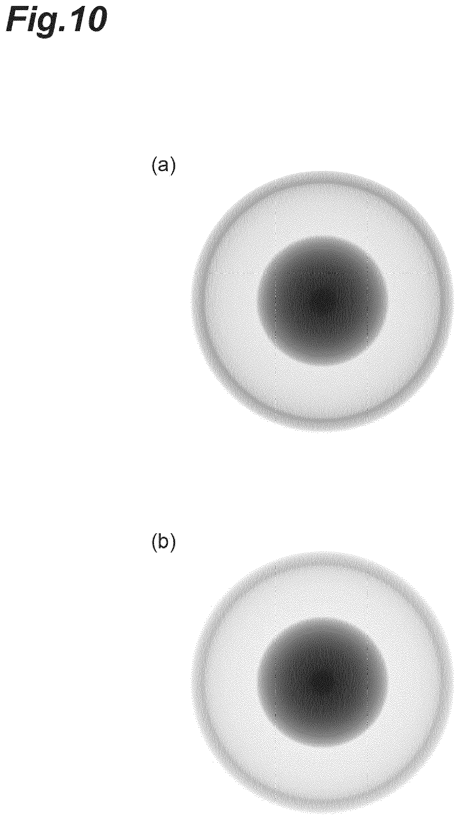

(a) in FIG. 10 is a diagram showing a projection image acquired by the imaging unit 12 when the measurement sample 4 is irradiated with the X-rays of the zeroth polychromatic spectrum. (b) in FIG. 10 is a diagram showing a projection image acquired by the imaging unit 12 when the measurement sample 4 is irradiated with the X-rays of the first polychromatic spectrum. As shown in these diagrams, the projection images of the spherical body 4a and the spherical shell 4b are slightly different depending on the used polychromatic spectra.

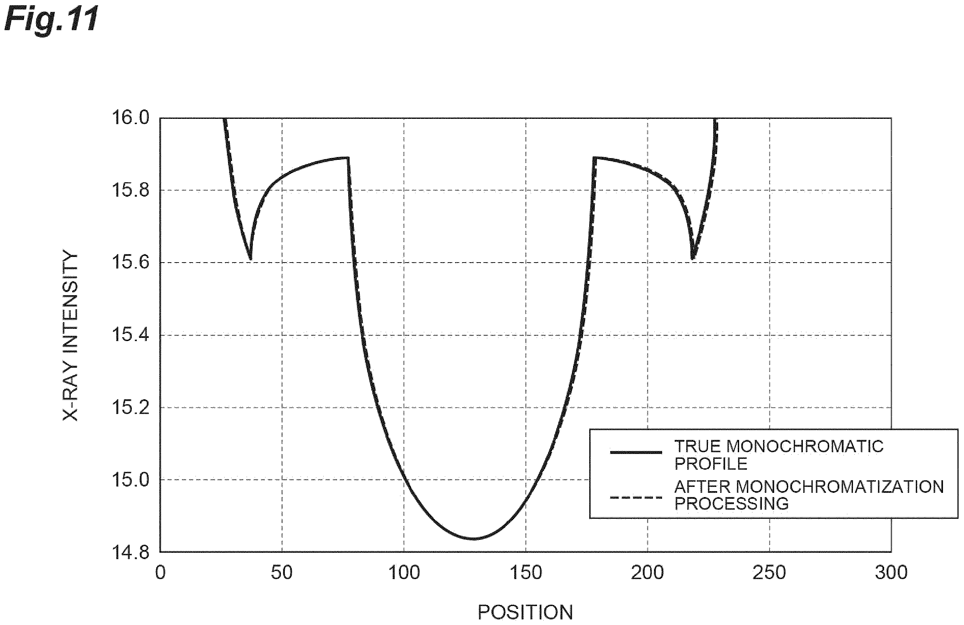

FIG. 11 is a diagram showing a profile of the projection image. This diagram shows the profile of the projection image of the monochromatic spectrum obtained by the monochromatization processing of the element distribution measurement method of the third aspect when the measurement sample 4 is irradiated with the X-rays of the polychromatic spectrum, and the profile (true monochromatic profile) of the projection image obtained when the measurement sample 4 is irradiated with the X-rays of the monochromatic spectrum. These profiles indicate the X-ray intensity at each position on a straight line passing through the center of the measurement sample 4. As shown in this diagram, the profiles are in good agreement with each other.

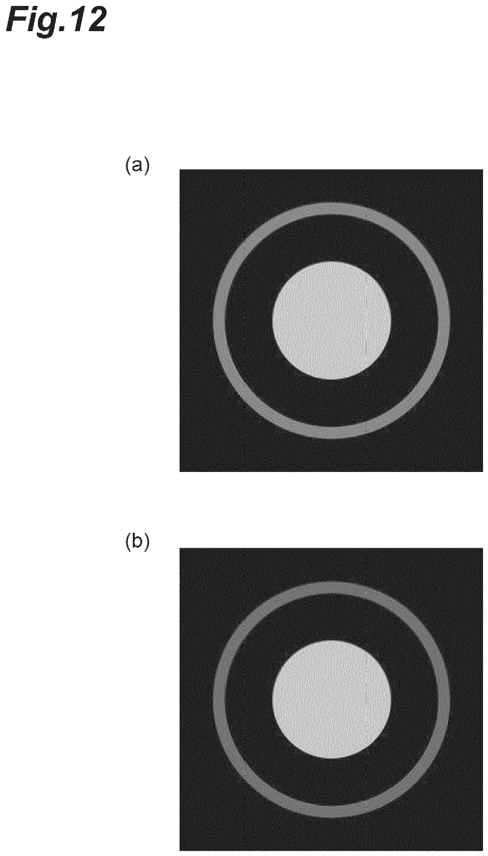

(a) in FIG. 12 is a diagram showing the distribution of the effective linear attenuation coefficient obtained when the measurement sample 4 is irradiated with the X-rays of the zeroth polychromatic spectrum. (b) in FIG. 12 is a diagram showing the distribution of the effective linear attenuation coefficient obtained when the measurement sample 4 is irradiated with the X-rays of the first polychromatic spectrum. These are obtained by the step S22 of the element distribution measurement method of the second aspect, and indicate the effective linear attenuation coefficient at each position on a plane passing through the center of the measurement sample 4.

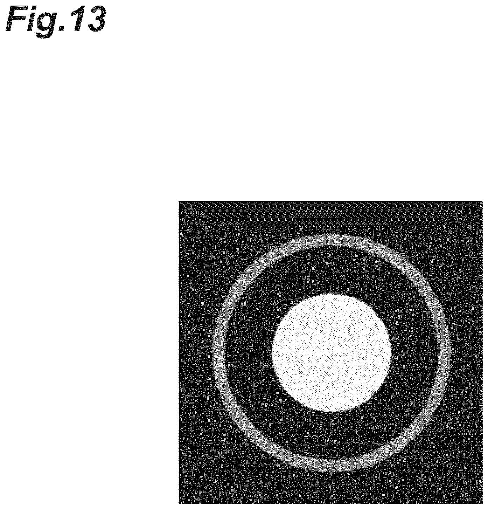

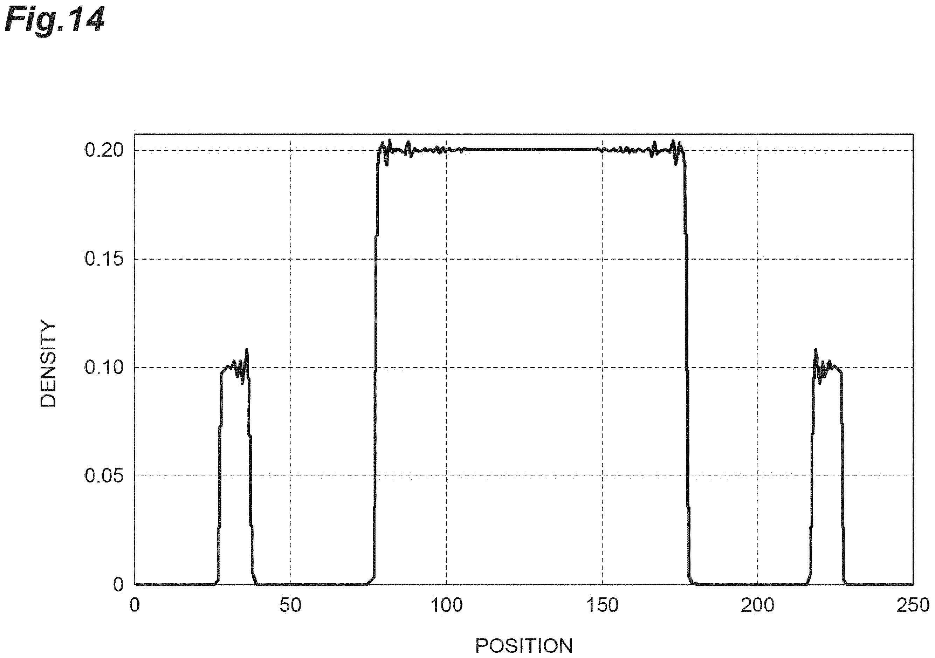

FIG. 13 and FIG. 14 are diagrams showing the density distribution of the measurement sample 4. These diagrams are obtained by the step S24 of the element distribution measurement method of the second aspect. FIG. 13 shows the density $\rho$ at each position on the plane passing through the center of the measurement sample 4 being indicated by grayscale. FIG. 14 shows the density $\rho$ at each position on the straight line passing through the center of the measurement sample 4. As shown in these diagrams, the distribution of the density $\rho$ as originally assumed is obtained with high accuracy.

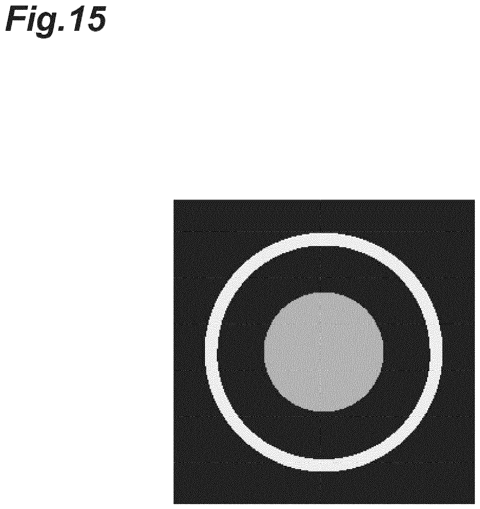

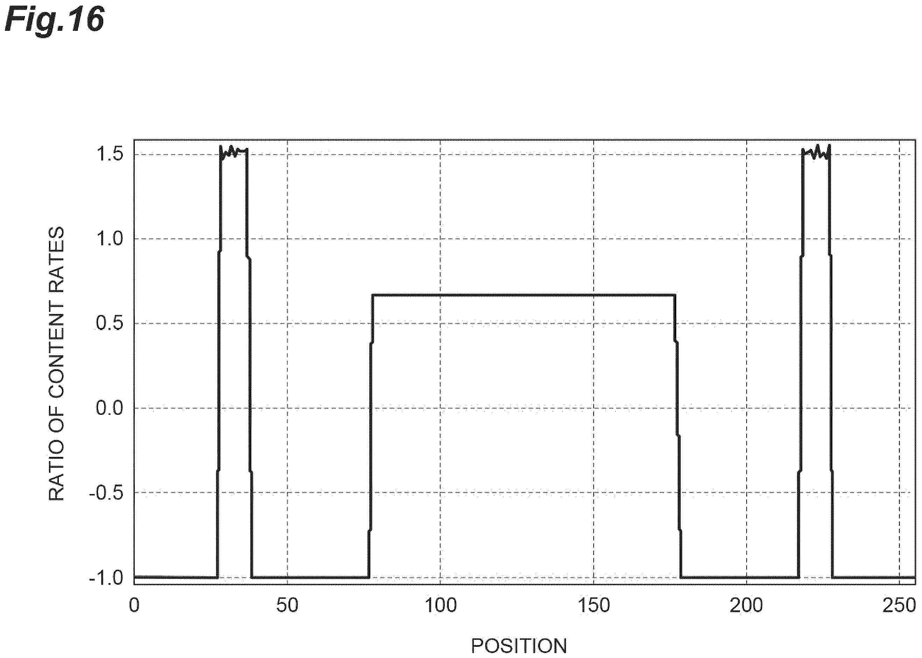

FIG. 15 and FIG. 16 are diagrams showing the distribution of the content rate of each element in the measurement sample 4. These diagrams are obtained by the step S24 of the element distribution measurement method of the second aspect. FIG. 15 shows the ratio ($\alpha_1 / \alpha_0$) of the content rates at each position on the plane passing through the center of the measurement sample 4 being indicated by grayscale. FIG. 16 shows the ratio ($\alpha_1 / \alpha_0$) of the content rates at each position on the straight line passing through the center of measurement sample 4. In addition, in the region of $\rho$ << 0.1, the ratio ($\alpha_1 / \alpha_0$) of the content rates is indicated as -1. As shown in these diagrams, the content rates $\alpha_0$ and $\alpha_1$ of the respective elements as originally assumed are obtained with high accuracy.

As described above, according to the present embodiment, there is no need to use a spectroscope, and thus, an inexpensive apparatus configuration can be achieved, and further, adjustment of an optical system is easy. According to the present embodiment, the distribution of the content rate of each element contained in the measurement sample can be easily measured in an inexpensive configuration.

The element distribution measurement apparatus or the element distribution measurement method of the present embodiment can be applied to observation of a form of a material, measurement of a composition distribution, and measurement of a density distribution. Specific examples thereof include the form observation, the composition distribution measurement, and the density distribution measurement of a composite material, and the composition distribution measurement (impurity) and the density distribution measurement (single crystal, polycrystal) of a semiconductor material.

Further, the element distribution measurement apparatus or the element distribution measurement method of the present embodiment can be applied to the chemical field (for example, measurement of a chemical reaction such as an oxidation reduction reaction, measurement of a composition distribution by adsorption). Specific examples thereof include the measurement of the chemical reaction in a lithium ion battery, and the measurement of an adsorbed material in a catalyst (exhaust gas, hydrogen).

Further, the element distribution measurement apparatus or the element distribution measurement method of the present embodiment can also be applied to the medical field. Specific examples thereof include hair test (mineral analysis), and measurement of a bone density and a density distribution of cancer.

The apparatus and the method according to the present invention are not limited to the embodiments and configuration examples described above, and various modifications are possible.

The element distribution measurement apparatus of the first aspect of the above embodiment is an apparatus for measuring a distribution of a content rate of each element contained in a measurement sample, and includes (1) a measurement unit for acquiring projection data by making rays of radiation of each of a plurality of monochromatic spectra in a band including X-rays and $\gamma$-rays incident on a measurement sample; and (2) an operation unit for obtaining a distribution of a content rate of each element contained in the measurement sample based on a distribution of a linear attenuation coefficient of the measurement sample obtained for each of the plurality of monochromatic spectra based on the projection data acquired by the measurement unit, and a formula of the linear attenuation coefficient represented by using a value of a mass attenuation coefficient of each element, a value of an atomic weight of each element, a variable of the content rate of each element, and a variable of a density of the measurement sample for each of the plurality of monochromatic spectra.

The element distribution measurement apparatus of the second aspect of the above embodiment is an apparatus for measuring a distribution of a content rate of each element contained in a measurement sample, and includes (1) a measurement unit for acquiring projection data by making rays of radiation of each of a plurality of polychromatic spectra in a band including X-rays and $\gamma$-rays incident on a measurement sample; and (2) an operation unit for obtaining a distribution of a content rate of each element contained in the measurement sample based on a distribution of an effective linear attenuation coefficient of the measurement sample obtained for each of the plurality of polychromatic spectra based on the projection data acquired by the measurement unit, and a formula of the effective linear attenuation coefficient represented by using a value of an effective mass attenuation coefficient of each element, a value of an atomic weight of each element, a variable of the content rate of each element, and a variable of a density of the measurement sample for each of the plurality of polychromatic spectra.

The element distribution measurement apparatus of the third aspect of the above embodiment is an apparatus for measuring a distribution of a content rate of each element contained in a measurement sample, and includes (1) a measurement unit for acquiring projection data by making rays of radiation of each of a plurality of polychromatic spectra each including any one or more of a plurality of monochromatic spectra in a band including X-rays and $\gamma$-rays incident on a measurement sample; and (2) an operation unit for obtaining a distribution of a content rate of each element contained in the measurement sample based on a distribution of a linear attenuation coefficient of the measurement sample obtained for each of the plurality of monochromatic spectra based on the projection data acquired by the measurement unit, and a formula of the linear attenuation coefficient represented by using a value of a mass attenuation coefficient of each element, a value of an atomic weight of each element, a variable of the content rate of each element, and a variable of a density of the measurement sample for each of the plurality of monochromatic spectra.

The element distribution measurement method of the first aspect of the above embodiment is a method for measuring a distribution of a content rate of each element contained in a measurement sample, and includes (1) a measurement step of acquiring projection data by making rays of radiation of each of a plurality of monochromatic spectra in a band including X-rays and γ-rays incident on a measurement sample; and (2) an operation step of obtaining a distribution of a content rate of each element contained in the measurement sample based on a distribution of a linear attenuation coefficient of the measurement sample obtained for each of the plurality of monochromatic spectra based on the projection data acquired in the measurement step, and a formula of the linear attenuation coefficient represented by using a value of a mass attenuation coefficient of each element, a value of an atomic weight of each element, a variable of the content rate of each element, and a variable of a density of the measurement sample for each of the plurality of monochromatic spectra.

The element distribution measurement method of the second aspect of the above embodiment is a method for measuring a distribution of a content rate of each element contained in a measurement sample, and includes (1) a measurement step of acquiring projection data by making rays of radiation of each of a plurality of polychromatic spectra in a band including X-rays and γ-rays incident on a measurement sample; and (2) an operation step of obtaining a distribution of a content rate of each element contained in the measurement sample based on a distribution of an effective linear attenuation coefficient of the measurement sample obtained for each of the plurality of polychromatic spectra based on the projection data acquired in the measurement step, and a formula of the effective linear attenuation coefficient represented by using a value of an effective mass attenuation coefficient of each element, a value of an atomic weight of each element, a variable of the content rate of each element, and a variable of a density of the measurement sample for each of the plurality of polychromatic spectra.

The element distribution measurement method of the third aspect of the above embodiment is a method for measuring a distribution of a content rate of each element contained in a measurement sample, and includes (1) a measurement step of acquiring projection data by making rays of radiation of each of a plurality of polychromatic spectra each including any one or more of a plurality of monochromatic spectra in a band including X-rays and γ-rays incident on a measurement sample; and (2) an operation step of obtaining a distribution of a content rate of each element contained in the measurement sample based on a distribution of a linear attenuation coefficient of the measurement sample obtained for each of the plurality of monochromatic spectra based on the projection data acquired in the measurement step, and a formula of the linear attenuation coefficient represented by using a value of a mass attenuation coefficient of each element, a value of an atomic weight of each element, a variable of the content rate of each element, and a variable of a density of the measurement sample for each of the plurality of monochromatic spectra.

**Industrial Applicability**

The present invention can be used as an apparatus and a method capable of easily measuring a distribution of a content rate of each element contained in a measurement sample with an inexpensive configuration.

**Reference Signs List**

1, 1A - element distribution measurement apparatus, 2, 2A - measurement unit, 3 - operation unit, 4 - measurement sample, 11, 11A, 11B, 11C - irradiation unit, 12 - imaging unit, 13 - holding unit, 14 - focusing optical system, 15 - imaging optical system, 20 - 23 - X-ray tube, 31 - 33 - filter, 40 - electron beam generation unit, 51 - 53 - target.

**Claims**

1. An element distribution measurement apparatus for measuring a distribution of a content rate of each element contained in a measurement sample, the apparatus comprising:

   a measurement unit for acquiring projection data by making rays of radiation of each of a plurality of monochromatic spectra in a band including X-rays and γ-rays incident on a measurement sample; and
   an operation unit for obtaining a distribution of a content rate of each element contained in the measurement sample based on a distribution of a linear attenuation coefficient of the measurement sample obtained for each of the plurality of monochromatic spectra based on the projection data acquired by the measurement unit, and a formula of the linear attenuation coefficient represented by using a value of a mass attenuation coefficient of each element, a value of an atomic weight of each element, a variable of the content rate of each element, and a variable of a density of the measurement sample for each of the plurality of monochromatic spectra.

2. An element distribution measurement apparatus for measuring a distribution of a content rate of each element contained in a measurement sample, the apparatus comprising:

a measurement unit for acquiring projection data by making rays of radiation of each of a plurality of polychromatic spectra in a band including X-rays and $\gamma$-rays incident on a measurement sample; and

an operation unit for obtaining a distribution of a content rate of each element contained in the measurement sample based on a distribution of an effective linear attenuation coefficient of the measurement sample obtained for each of the plurality of polychromatic spectra based on the projection data acquired by the measurement unit, and a formula of the effective linear attenuation coefficient represented by using a value of an effective mass attenuation coefficient of each element, a value of an atomic weight of each element, a variable of the content rate of each element, and a variable of a density of the measurement sample for each of the plurality of polychromatic spectra.

3. An element distribution measurement apparatus for measuring a distribution of a content rate of each element contained in a measurement sample, the apparatus comprising:

a measurement unit for acquiring projection data by making rays of radiation of each of a plurality of polychromatic spectra each including any one or more of a plurality of monochromatic spectra in a band including X-rays and $\gamma$-rays incident on a measurement sample; and

an operation unit for obtaining a distribution of a content rate of each element contained in the measurement sample based on a distribution of a linear attenuation coefficient of the measurement sample obtained for each of the plurality of monochromatic spectra based on the projection data acquired by the measurement unit, and a formula of the linear attenuation coefficient represented by using a value of a mass attenuation coefficient of each element, a value of an atomic weight of each element, a variable of the content rate of each element, and a variable of a density of the measurement sample for each of the plurality of monochromatic spectra.

4. An element distribution measurement method for measuring a distribution of a content rate of each element contained in a measurement sample, the method comprising:

a measurement step of acquiring projection data by making rays of radiation of each of a plurality of monochromatic spectra in a band including X-rays and $\gamma$-rays incident on a measurement sample; and

an operation step of obtaining a distribution of a content rate of each element contained in the measurement sample based on a distribution of a linear attenuation coefficient of the measurement sample obtained for each of the plurality of monochromatic spectra based on the projection data acquired in the measurement step, and a formula of the linear attenuation coefficient represented by using a value of a mass attenuation coefficient of each element, a value of an atomic weight of each element, a variable of the content rate of each element, and a variable of a density of the measurement sample for each of the plurality of monochromatic spectra.

5. An element distribution measurement method for measuring a distribution of a content rate of each element contained in a measurement sample, the method comprising:

a measurement step of acquiring projection data by making rays of radiation of each of a plurality of polychromatic spectra in a band including X-rays and $\gamma$-rays incident on a measurement sample; and

an operation step of obtaining a distribution of a content rate of each element contained in the measurement sample based on a distribution of an effective linear attenuation coefficient of the measurement sample obtained for each of the plurality of polychromatic spectra based on the projection data acquired in the measurement step, and a formula of the effective linear attenuation coefficient represented by using a value of an effective mass attenuation coefficient of each element, a value of an atomic weight of each element, a variable of the content rate of each element, and a variable of a density of the measurement sample for each of the plurality of polychromatic spectra.

6. An element distribution measurement method for measuring a distribution of a content rate of each element contained in a measurement sample, the method comprising:

a measurement step of acquiring projection data by making rays of radiation of each of a plurality of polychromatic spectra each including any one or more of a plurality of monochromatic spectra in a band including X-rays and $\gamma$-rays incident on a measurement sample; and

an operation step of obtaining a distribution of a content rate of each element contained in the measurement sample based on a distribution of a linear attenuation coefficient of the measurement sample obtained for each of the plurality of monochromatic spectra based on the projection data acquired in the measurement step, and a formula of the linear attenuation coefficient represented by using a value of a mass attenuation coefficient of each element, a value of an atomic weight of each element, a variable of the content rate of each element, and a variable of a density of the measurement sample for each of the plurality of monochromatic spectra.

Fig.1

IRRADIATION UNIT — 11

MEASUREMENT SAMPLE — 4

HOLDING UNIT — 13

IMAGING UNIT — 12

OPERATION UNIT — 3

2

1

EP 4 357 767 A1

Fig.2

*Fig.3*

Fig.4

11B

31

32

33

20

**Fig.5**

# Fig.6

START

ACQUIRE PROJECTION DATA FOR EACH OF PLURALITY OF MONOCHROMATIC SPECTRA ~S11

OBTAIN DISTRIBUTION OF LINEAR ATTENUATION COEFFICIENT OF MEASUREMENT SAMPLE FOR EACH OF PLURALITY OF MONOCHROMATIC SPECTRA ~S12

REPRESENT LINEAR ATTENUATION COEFFICIENT BY FORMULA FOR EACH OF PLURALITY OF MONOCHROMATIC SPECTRA ~S13

OBTAIN DISTRIBUTION OF CONTENT RATE OF EACH ELEMENT BASED ON DISTRIBUTION OF LINEAR ATTENUATION COEFFICIENT OF MEASUREMENT SAMPLE AND FORMULA OF LINEAR ATTENUATION COEFFICIENT ~S14

END

# Fig.7

START

ACQUIRE PROJECTION DATA FOR EACH OF
PLURALITY OF POLYCHROMATIC SPECTRA ~S21

OBTAIN DISTRIBUTION OF EFFECTIVE LINEAR
ATTENUATION COEFFICIENT OF
MEASUREMENT SAMPLE FOR EACH OF
PLURALITY OF POLYCHROMATIC SPECTRA ~S22

REPRESENT EFFECTIVE LINEAR ATTENUATION
COEFFICIENT BY FORMULA FOR EACH OF
PLURALITY OF POLYCHROMATIC SPECTRA ~S23

OBTAIN DISTRIBUTION OF CONTENT RATE
OF EACH ELEMENT BASED ON DISTRIBUTION OF
EFFECTIVE LINEAR ATTENUATION COEFFICIENT
OF MEASUREMENT SAMPLE AND FORMULA OF
EFFECTIVE LINEAR ATTENUATION COEFFICIENT ~S24

END

# Fig.8

```
                    ( START )
                        │
┌───────────────────────────────────────────┐
│  ACQUIRE PROJECTION DATA FOR EACH OF        │
│  PLURALITY OF POLYCHROMATIC SPECTRA         │──S31
│  EACH INCLUDING ANY ONE OR MORE OF          │
│  PLURALITY OF MONOCHROMATIC SPECTRA         │
└───────────────────────────────────────────┘
                        │
┌───────────────────────────────────────────┐
│  OBTAIN DISTRIBUTION OF LINEAR              │
│  ATTENUATION COEFFICIENT OF                 │──S32
│  MEASUREMENT SAMPLE FOR EACH OF             │
│  PLURALITY OF MONOCHROMATIC SPECTRA         │
└───────────────────────────────────────────┘
                        │
┌───────────────────────────────────────────┐
│  REPRESENT LINEAR ATTENUATION              │
│  COEFFICIENT BY FORMULA FOR EACH OF         │──S33
│  PLURALITY OF MONOCHROMATIC SPECTRA         │
└───────────────────────────────────────────┘
                        │
┌───────────────────────────────────────────┐
│  OBTAIN DISTRIBUTION OF CONTENT RATE        │
│  OF EACH ELEMENT BASED ON DISTRIBUTION      │──S34
│  OF LINEAR ATTENUATION COEFFICIENT OF       │
│  MEASUREMENT SAMPLE AND FORMULA             │
│  OF LINEAR ATTENUATION COEFFICIENT          │
└───────────────────────────────────────────┘
                        │
                    ( END )
```

**Fig.9**

# Fig.10

(a)

(b)

Fig.11

EP 4 357 767 A1

# Fig.12

(a)

(b)

Fig.13

Fig.14

Fig.15

## Fig.16

EP 4 357 767 A1

# EP 4 357 767 A1

## INTERNATIONAL SEARCH REPORT

| International application No. |
|---|
| **PCT/JP2022/026359** |

**A.    CLASSIFICATION OF SUBJECT MATTER**

*G01N 23/046*(2018.01)i; *G01N 23/087*(2006.01)i
FI:    G01N23/046; G01N23/087

According to International Patent Classification (IPC) or to both national classification and IPC

**B.    FIELDS SEARCHED**

Minimum documentation searched (classification system followed by classification symbols)

G01N23/00-23/2276; A61B6/00-6/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C.    DOCUMENTS CONSIDERED TO BE RELEVANT**

| Category* | Citation of document, with indication, where appropriate, of the relevant passages | Relevant to claim No. |
|---|---|---|
| A | US 2020/0342601 A1 (HIWIN TECHNOLOGIES CORP.) 29 October 2020 (2020-10-29) | 1–6 |
| A | JP 6-58288 B2 (AMERICAN TELEPHONE AND TELEGRAPH CO.) 03 August 1994 (1994-08-03) | 1–6 |
| A | JP 2005-501684 A (SIEMENS AG) 20 January 2005 (2005-01-20) | 1–6 |
| A | US 2005/0084063 A1 (HEISMANN, Bjoern) 21 April 2005 (2005-04-21) | 1–6 |
| A | JP 2019-117193 A (TSINGHUA UNIVERSITY) 18 July 2019 (2019-07-18) | 1–6 |
| A | JP 2004-347328 A (HITACHI, LTD.) 09 December 2004 (2004-12-09) | 1–6 |
| A | JP 2009-240764 A (CANON INC.) 22 October 2009 (2009-10-22) | 1–6 |
| A | HEISMANN, B. J. et al., Density and atomic number measurements with spectral x-ray attenuation method, Journal of Applied Physics, 2003, vol. 94, no. 3, pp. 2073-2079, http://dx.doi.org/10.1063/1.1586963<br>    in particular, pp. 2073-2079 | 1–6 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 September 2022** | **20 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/026359**

| Patent document cited in search report | | | Publication date (day/month/year) | Patent family member(s) | | | Publication date (day/month/year) |
|---|---|---|---|---|---|---|---|
| US | 2020/0342601 | A1 | 29 October 2020 | (Family: none) | | | |
| JP | 6-58288 | B2 | 03 August 1994 | JP | 61-204534 | A | |
| | | | | US | 4618975 | A | |
| JP | 2005-501684 | A | 20 January 2005 | US | 2004/0223585 | A1 | |
| | | | | WO | 2003/024331 | A2 | |
| | | | | DE | 10143131 | A1 | |
| | | | | CN | 1551745 | A | |
| US | 2005/0084063 | A1 | 21 April 2005 | DE | 10347971 | B3 | |
| JP | 2019-117193 | A | 18 July 2019 | US | 2019/0192090 | A1 | |
| | | | | GB | 2571192 | A | |
| | | | | DE | 102018133435 | A1 | |
| | | | | CN | 109959669 | A | |
| JP | 2004-347328 | A | 09 December 2004 | (Family: none) | | | |
| JP | 2009-240764 | A | 22 October 2009 | US | 2010/0278304 | A1 | |
| | | | | US | 2010/0318302 | A1 | |
| | | | | WO | 2009/113713 | A1 | |
| | | | | CN | 101960298 | B | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MASAHIKO HIRANO ; KAZUJI MATSUMOTO.** Fluorescence Imaging by Unmixing Method - Application for Live Cell Imaging. *Journal of the Society of Instrument and Control Engineers,* 2006, vol. 45 (11), 977-981